# FASCICULE DE BREVET EUROPEEN

(11) **EP 0 390 710 B1**
(45) Date de publication et mention de la délivrance du brevet: **10.02.1993**
(21) Numéro de dépôt: 90420148.0
(22) Date de dépôt: 23.03.1990
(51) Int. Cl.: G01B 11/00

(54) **Dispositif de contrôle de la position de différents points d'un véhicule**
Vorrichtung zur Kontrolle der Lage von verschiedenen Punkten eines Fahrzeuges
Device to control the position of different points of a vehicle

(30) Priorité: 24.03.1989 FR 8904210
(43) Date de publication de la demande: 03.10.1990
(73) Titulaire: CELETTE S.A., F-38200 Vienne (FR)
(72) Inventeur: Celette, Germain, F-38200 Vienne (FR)
(74) Mandataire: Maureau, Philippe

(56) Documents cités:
- EP-A- 0 119 876
- FR-A- 2 260 081
- FR-A- 2 588 375
- GB-A- 2 075 185
- US-A- 4 694 160
- PATENT ABSTRACTS OF JAPAN, vol. 10, no. 80 (P-441)(2137) 29 mars 1986; & JP-A-60218017

## Description

La présente invention a pour objet un dispositif de contrôle de la position de différents points d'un véhicule, le terme véhicule étant pris au sens large et pouvant concerner tout aussi bien des véhicules automobiles que d'autres types de véhicules tels que des avions ou des parties de ceux-ci.

Afin d'assurer la sécurité des usagers de la route, il serait avantageux d'effectuer des contrôles systématiques des véhicules, en vérifiant la symétrie du véhicule par rapport à son axe longitudinal ainsi que le bon positionnement d'un certain nombre de points caractéristiques.

Aujourd'hui, ce n'est que lorsqu'un véhicule est sérieusement accidenté qu'il est procédé à un contrôle précis de celui-ci, par une opération de "passage au marbre".

Lorsqu'un véhicule automobile est accidenté, il convient d'effectuer un redressement contrôlé des parties déformées afin que celles-ci soient ramenées dans leur position d'origine. A cet effet, est utilisé un marbre comprenant un châssis métallique rectangulaire sur lequel le véhicule est monté par l'intermédiaire de quatre mors venant pincer le bas de caisse, les cotes longitudinales, latérales et en hauteur des quatre mors étant fonction du type de véhicule à réparer. Une fois le véhicule positionné de façon correcte et fixé sur le marbre, il est procédé à la mise en place sur le marbre et sous le véhicule d'un cadre de mesure portant des échelles graduées longitudinales. Après positionnement du cadre par rapport au véhicule en considérant trois points de réglage servant de référence, pris dans une partie non déformée du véhicule, il est procédé au blocage du châssis sur le marbre. Sur le cadre de mesure sont destinées à être fixées transversalement des règles graduées sur lesquelles peuvent coulisser des chariots portant des doigts de mesure ou "tours" réglables verticalement et dont la position en hauteur est repérée par un index gradué.

Le réparateur dispose, pour chaque type de véhicule, de trois cotes d'un certain nombre de points caractéristiques, ainsi que des accessoires destinés à la mesure de chaque point. Les différentes valeurs sont lues respectivement sur les règles longitudinales, sur les règles transversales et sur les tours. Cette solution ne donne pas toute satisfaction pour de nombreuses raisons. Tout d'abord, elle impose une mesure purement manuelle, effectuée parfois dans des zones difficilement accessibles, pouvant engendrer des erreurs. D'autre part, il n'est pas possible, compte-tenu des déformations du véhicule et de la présence des moyens de fixation, de redressement et de contrôle de celui-ci, d'accéder en tous points de la carrosserie et du châssis. Enfin, il est nécessaire à partir des coordonnées de référence, de calculer les coordonnées des points identifiés sur la fiche technique, ce qui est long, fastidieux et peut être source d'erreur. Il faut également que l'opérateur compare les valeurs de la mesure effectuée aux valeurs du point mesuré figurant sur la fiche de référence.

Le document GB-A-2 075 185 concerne un dispositif de contrôle dans un plan de points de la carrosserie ou du châssis d'un véhicule, par mesure de la distance de chaque point considéré par rapport à une règle sur laquelle sont montés une source lumineuse et deux chariots portant des miroirs réfléchissant les faisceaux lumineux pour qu'ils convergent sur la cible. La distance entre chaque point mesuré et la règle est obtenue par un calcul de triangulation.

Le document EP-A-0 119 876 décrit un dispositif comprenant une tête montée pivotante sur un support autour d'au moins deux axes de rotations non parallèles, et équipée de moyens pour définir la distance entre un point du véhicule et un point de la tête, des moyens de mesure de la position angulaire de la tête par rapport au support, et des moyens de calcul des coordonnées des points mesurés.

Le but de l'invention est de fournir un dispositif de contrôle de la position de plusieurs points d'un véhicule ne nécessitant pas de montage du véhicule sur un châssis de mesure, ni de contact entre les outils de mesure et le véhicule, tout en permettant d'obtenir des informations qualitatives et quantitatives, en déterminant d'une part si le véhicule est déformé et quelle partie de celui-ci est déformée, et d'autre part, quelle est la valeur du déplacement des points mesurés par rapport à la référence du constructeur.

A cet effet, le dispositif qu'elle concerne comprend :
- un télémètre qui a pour but de mesurer la distance le séparant de chaque point à mesurer,
- des moyens d'orientation du télémètre autour de deux axes de rotation perpendiculaires,
- deux ensembles moteurs pas à pas et réducteurs assurant les deux mouvements de rotation, et
- un calculateur équipé d'un micro-processeur destiné à :
   . acquérir chaque mesure de distance mesurée par le télémètre,
   . commander le mouvement des moteurs pas à pas en mémorisant le nombre de pas effectués au cours de la rotation autour de chaque axe,
   . calculer, à partir de la distance entre le télémètre et chaque point, et des angles de rotation du faisceau entre les différents points mesurés, la distance entre au moins deux points, ou les coordonnées d'au moins un point par rapport à un point mesuré précédemment.

Selon une forme d'exécution, ce dispositif comprend un télémètre laser, et les points dont la distance par rapport au télémètre est à mesurer sont équipés de cibles renvoyant la lumière du rayon laser dans sa direction d'émission.

Avantageusement, le calculateur est équipé de moyens de stockage en mémoire de valeurs théoriques des coordonnées d'un certain nombre de points ou des distances entre certains points du véhicule, et de moyens de comparaison des valeurs mesurées à ces valeurs théoriques, ou de valeurs mesurées entre elles.

Il est ainsi possible d'effectuer divers types de contrôle de véhicule, sans contact avec celui-ci, tels que : mesure de distances latérales (entr'axes de roues, charnières de portières, angles de vitres, extrémités de gouttières) ; mesure de points situés sous le châssis du véhicule ; mesure de parallélisme de roues, d'angles de carrossage, d'angles de chasse et de mise en butée des roues directionnelles.

Selon une caractéristique de l'invention, ce dispositif comprend une cible réflectrice destinée à être fixée en chaque point du véhicule appartenant à une série de mesures. Cette cible, qui favorise la réflexion du rayon laser et permet un bon positionnement de celui-ci, peut être fixée par des moyens magnétiques, par collage temporaire, ou par coincement, selon la configuration de l'environnement du point de mesure.

En outre, et afin de permettre un centrage automatique du rayon laser sur chaque cible, le télémètre est conçu également pour mesurer l'intensité lumineuse du rayon laser reçu, le calculateur étant agencé pour agir sur les moteurs pas à pas de positionnement du rayon laser, pour déplacer celui-ci vis-à-vis d'une cible, jusqu'à réception de l'intensité lumineuse maximale.

Il suffit donc à l'opérateur, préalablement à la mesure d'un point, de viser sommairement ce point à l'aide du rayon laser, puis de commander la séquence automatique de visée du point à mesurer.

Conformément à une première forme d'exécution de ce dispositif, le télémètre est monté sur un support articulé suivant deux axes de rotation perpendiculaires, le point d'intersection de ces deux axes étant confondu avec le point d'origine des mesures du télémètre.

Conformément à une seconde forme d'exécution de ce dispositif, le télémètre est monté sur un support fixe et le rayon laser est pointé sur un miroir articulé autour de deux axes perpendiculaires dont le point d'intersection est confondu avec le point d'impact du rayon laser sur le miroir.

Le miroir étant plus léger à déplacer que le télémètre, cette seconde forme d'exécution permet d'utiliser des moteurs moins puissants, un système d'articulation plus léger et de simplifier le réglage de la coïncidence du point d'impact du rayon laser avec l'intersection des deux axes de rotation.

Selon une autre caractéristique de l'invention, un dispositif électronique permet, sur demande du calculateur, de renvoyer sur le récepteur une partie du faisceau de l'émetteur selon un trajet connu, donnant ainsi une possibilité d'étalonnage. Ceci permet de s'affranchir des éventuelles variations dans le temps de paramètres tels que température ou pression atmosphérique.

De préférence, ce dispositif comprend un chariot sur lequel est monté le télémètre. Pour effectuer des mesures sous un véhicule, il est avantageux, pour éviter d'avoir à trop lever le véhicule, que le chariot soit le plus bas possible. Dans un tel cas, le pupitre de commande n'est pas monté sur le chariot. Inversement, dans le cas d'un dispositif destiné à réaliser des mesures latérales, il est possible de monter le pupitre de commande : écran et clavier sur le chariot. Le calculateur et l'imprimante assurant l'édition des résultats de mesures sont, pour leur part, montés à un emplacement fixe.

Il est également possible, dans le cas de mesures latérales, de disposer d'un tunnel dans lequel deux télémètres, commandés par le même calculateur, sont montés sur des supports fixes.

De toute façon, l'invention sera bien comprise à l'aide de la description qui suit, en référence au dessin schématique annexé, représentant, à titre d'exemples non limitatifs, plusieurs formes d'exécution de ce dispositif :
Figures 1 et 2 sont deux vues en perspective de trois-quart avant et de trois-quart arrière d'un dispositif de mesure et de contrôle monté sur un chariot ;
Figures 3 et 4 sont deux vues schématiques mettant en évidence deux possibilités d'orientation du rayon laser ;
Figures 5 et 6 sont deux vues, respectivement, de dessus et de face, au cours d'une opération de contrôle latéral d'un véhicule ;

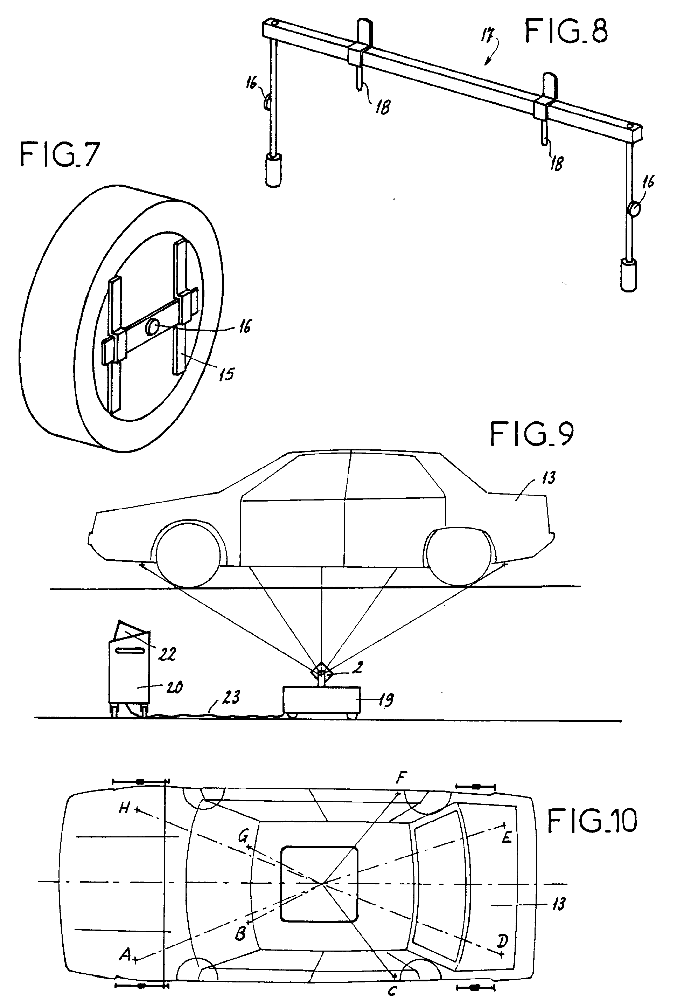

Figure 7 est une vue d'un dispositif destiné à assurer la visée du centre d'une roue ;
Figure 8 est une vue d'un outil permettant d'assurer la visée ; à l'aide du dispositif de mesure, en prenant compte les points d'attache des amortisseurs MAC PHERSON ;
Figures 9 et 10 sont deux vues, respectivement, de côté et de dessus d'un véhicule, montrant les possibilités de contrôle de celui-ci par en-dessous.

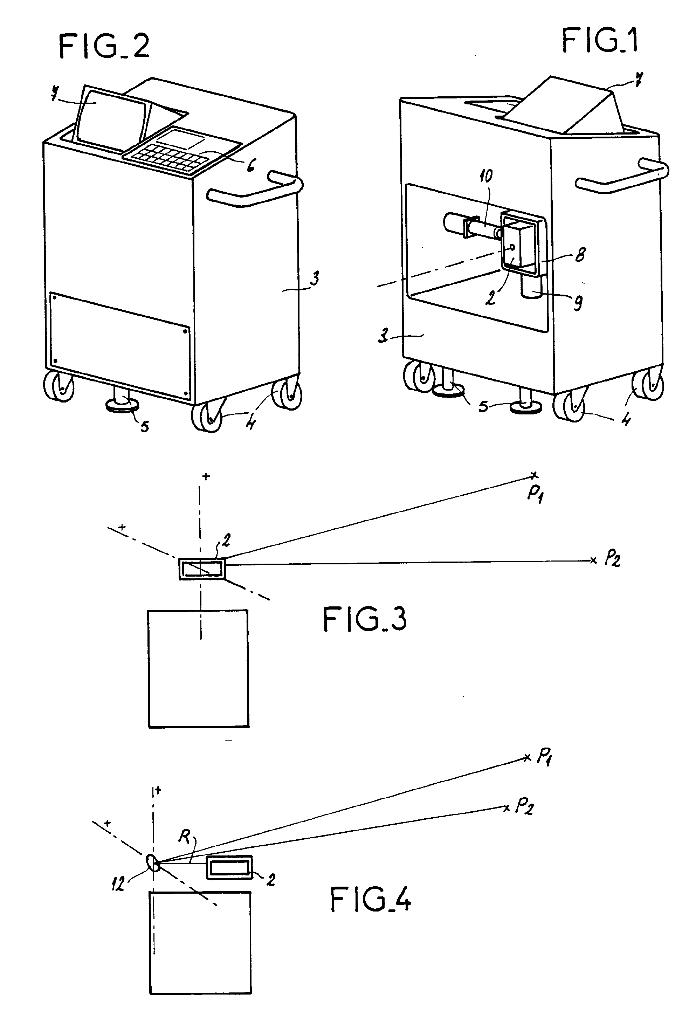

Le dispositif selon l'invention, comprend essentiellement un télémètre laser qui, dans la forme d'exécution représentée aux figures 1 et 2, est monté à l'intérieur d'un châssis appartenant à un chariot équipé de roulettes 4 et de trois pieds télescopiques 5 destinés à assurer la stabilité du chariot en période de mesure.

Dans la face supérieure du chariot sont montés un pupitre de commande 6 et un écran de contrôle 7. Le télémètre 2 est destiné à mesurer la distance le séparant d'un point à mesurer.

Cette mesure de distance est effectuée par mesure du temps de propagation du rayon, cette mesure étant ramenée ensuite a une mesure de déphasage. Si D est la distance à mesurer et C est la vitesse de la lumière, le temps de propagation t est égal à :
t = 2D /C.

Une résolution de 0,1 mm implique une résolution en temps de l'ordre de 0,6 ps. Compte tenu de la faiblesse de cette valeur, il est choisi de se ramener à une mesure de déphasage sur une onde porteuse haute-fréquence. A cet effet, le faisceau de la diode laser formant l'émetteur est modulé en haute-fréquence, diffusé par la cible, modulé à la même fréquence, collecté par le photo-recepteur et amplifié.

Le temps de propagation se présente alors sous forme d'un déphasage de deux signaux haute-fréquence, la mesure de phase s'effectuant en basse fréquence, en opérant un changement de fréquences sur les deux signaux haute-fréquence ce qui ne modifie pas le déphasage.

Ainsi la distance cherchée est directement proportionnelle à la phase mesurée.

En outre, un dispositif électronique intégré à la tête de mesure permet de renvoyer sur le récepteur, sur demande des moyens de commande, une partie du faisceau de l'émetteur selon un trajet connu, fournissant ainsi une possibilité d'étalonnage simple permettant de s'affranchir d'éventuelles variations dans le temps de paramètres, tels que température ou pression atmosphérique.

Cet appareil fournit deux mesures à la demande :
- une mesure de la distance séparant la diode réceptrice de la cible visée avec une précision de l'ordre de 0,2 mm pour des distances variant entre 0 et 5 m environ ;
- une mesure d'intensité lumineuse du rayon laser reçu par l'appareil. Cette mesure est exploitée pour effectuer le centrage automatique du rayon sur la cible. Pour permettre ce centrage, les cibles sont conformées pour accroître la réflexion du rayon laser en direction du télémètre. La surface de chaque cible est réflectrice, constituée par exemple par des billes de verre de petit diamètre et un anneau noir est imprimé au centre de la cible, afin de permettre de bénéficier d'une réflexion d'intensité maximale a ce niveau.

Afin de balayer un espace très ample avec le rayon laser, le télémètre est monté sur un support 8 articulé suivant deux axes de rotation perpendiculaires 9 et 10. Pour que le point d'origine des mesures reste fixe, lorsque le télémètre est entraîné en rotation autour des deux axes, le point d'intersection de ces deux axes est confondu avec le point d'origine des mesures du télémètres.

Un tel agencement est représenté à la Figure 3.

Une autre possibilité pour obtenir le mouvement du rayon laser est schématisé à la Figure 4. Dans ce cas, le télémètre 2 est fixe et le rayon laser R est pointé sur un miroir 12 qui est articulé autour de deux axes perpendiculaires dont l'intersection coïncide avec le point d'impact du rayon sur le miroir.

Quelle que soit la solution envisagée, la mise en rotation est assurée par deux ensembles moteurs pas à pas et réducteurs montés en bout des arbres 9, 10, afin de commander leurs déplacements angulaires respectifs avec une excellente précision (+ 0,001° d'angle), entre la visée d'un point P1 et celle d'un point P2.

Ce dispositif comprend également un calculateur équipé d'un micro-processeur. Ce calculateur vise à :
- commander la calibration du télémètre et acquérir les mesures de celui-ci ;
- commander les moteurs pas à pas et la mémorisation du nombre de pas effectué pour chaque axe ;
- calculer les distances séparant les divers points mesurés ;
- comparer ces distances deux à deux ou les comparer à des valeurs théoriques ;
- calculer les coordonnées d'au moins un point par rapport à un point de mesure initiale ;
- stocker en mémoire des valeurs théoriques par type et par année de véhicule ;
- générer l'affichage des résultats obtenus avec la date et l'heure ;
- générer l'édition des résultats obtenus avec la date et l'heure sur une imprimante.

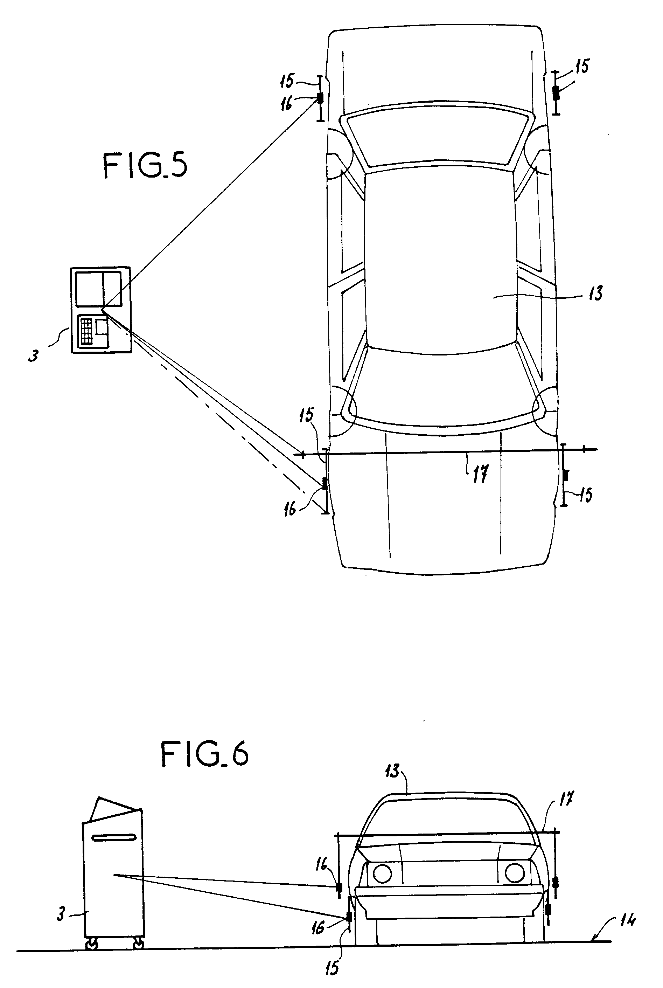

Les figures 5 et 6 montrent comment réaliser des mesures latérales sur un véhicule 13. Celui-ci est présenté sur ses roues, sur une surface 14 approximativement plane. L'opérateur positionne le chariot 3 contenant l'appareil de mesure et de contrôle sur un des deux côtés du véhicule à une distance de celui-ci suffisante pour que le rayon puisse être déplacé successivement en direction des différents points à mesurer.

Si l'on veut mesurer la distance entre les deux roues avant et arrière, il est procédé à la mise en place sur les jantes du véhicule d'une pièce 15 dont la partie, située au niveau de l'axe, comporte une cible 16 renvoyant la lumière du rayon laser dans sa direction d'émission. L'opérateur amène le rayon laser sur la première cible. Il appuie en suite sur une touche de fonction du pupitre pour déclencher la recherche automatique du centre de la cible, en vue de réaliser le positionnement automatique du rayon sur ce centre.

Après validation de la mesure, l'opérateur oriente le rayon pour viser l'autre cible. Après validation, et dans la mesure où seule la distance entre les axes de deux roues est à mesurer, l'opérateur commande le calcul de cette longueur, qui est obtenue en tenant compte de la distance entre le télémètre et chaque cible, et des angles dont a pivoté le télémètre pour passer d'une cible à l'autre.

Il est possible, au cours de la même opération, de viser une cible 16 montée sur un outil 17 en forme de portique comportant des organes 18 venant prendre appui sur les points d'attache des amortisseurs MAC PHERSON.

Lorsque les mesures ont été effectuées d'un côté du véhicule, le chariot est amené de l'autre côté de celui-ci en vue de réaliser des mesures correspondantes qui sont ensuite comparées par le calculateur.

Dans le cas d'un tunnel de contrôle, il peut être prévu deux télémètres disposés de chaque côté du tunnel, entre lesquels passe le véhicule. L'opérateur n'a plus à manipuler de chariots, et les deux télémètres, commandés par le même calculateur, fournissent un résultat immédiat.

La même procédure peut être utilisée pour contrôler la carosserie même d'un véhicule. Il suffit alors de pointer le rayon laser sur des points caractéristiques précis de la carrosserie, tels que charnières de portes, extrêmités de gouttières, angles de pare-brise ou de vitres, etc...

Il est possible de comparer les distances calculées entre un côté et l'autre du véhicule, ou encore de comparer ces distances à des valeurs théoriques de références.

Le dispositif, selon l'invention, permet également des mesures latérales approfondies, le véhicule ne reposant plus sur ses roues, ces dernières étant démontées, les outils de roues 15 étant disposés non plus sur la roue, mais sur le moyeu de roue ou le disque de frein.

Il est également possible de réaliser des mesures de parallélisme de roue, d'angle de carrossage, d'angle de chasse ou d'angle de mise en butée des roues directionnelles, motrices ou non.

A cet effet, il convient de disposer d'un outil porteur de cibles, comportant une cible au centre de l'outil et plusieurs cibles, par exemple quatre, disposées selon un cercle centré sur l'axe de la roue. La procédure de mesure est identique à celles indiquées précédemment, mais elle permet en plus, en jouant sur la rotation du moyeu, de contrôler les faux ronds ou les voilages de roues, de comparer des angles et des longueurs entre l'essieu avant et l'essieu arrière, et de vérifier les angles lors des mises en butée des roues directrices.

Les figures 9 et 10 illustrent un mode de contrôle du véhicule par en-dessous.

A cet effet, le véhicule 13 est placé sur un élévateur non représenté au dessin, et un chariot 19 portant le seul télémètre 2 est glissé sous le véhicule sensiblement au centre de celui-ci. Un chariot 20 comportant le pupitre de commande 22 est relié à un câble 23 au chariot 19.

Il est possible d'effectuer des visées sur un certain nombre de points remarquables du châssis du véhicule, qui sont au nombre de huit dans la forme d'exécution représentée au dessin, et qui sont référencés de A à H.

Partant d'un point qui appartient à une zone non déformée du véhicule, l'opérateur effectue successivement des mesures au niveau des autre points, le calculateur possèdant en mémoire les coordonnées théoriques des différents points ainsi que les distances entre ces différents points, fournissant un écart éventuel entre la position mesurée et la position théorique.

Dans la mesure où, pour un type de véhicule peu courant, l'opérateur ne disposerait pas de fiches de mesures, il peut toutefois effectuer un contrôle très précis de la symétrie du véhicule, en comparant les longueurs respectives entre plusieurs points situés d'un côté du véhicule et de l'autre côté du véhicule, et également en calculant par rapport à l'axe de symétrie du véhicule, le point de croisement entre des lignes correspondantes coupant cet axe de symétrie.

Tous ces types de mesures et l'exploitation de leurs résultats sont fonctions des programmes informatiques dont dispose le calculateur.

Comme il ressort de ce qui précède, l'invention apporte une grande amélioration à la technique existante, en fournissant un dispositif de contrôle de la position de points caractéristiques d'un véhicule, permettant de vérifier, sans contact avec le véhicule et sans intervention particulière sur celui-ci, la conformité de ses cotes par rapport aux cotes théoriques.

En outre, ce dispositif peut être également utilisé dans le cadre de la réparation de véhicule, puisque permettant à l'opérateur de déterminer quelles sont les zones déformées du véhicule et quelle est la valeur de la déformation, ce qui lui permet de déterminer comment intervenir sur le véhicule pour qu'il retrouve sa conformité aux cotes d'origine.

## Revendications

1. Dispositif de contrôle de la position de différents points d'un véhicule, du type comprenant une tête montée pivotante sur un support autour d'au moins deux axes de rotations non parallèles, et équipée de moyens pour définir la distance entre un point du véhicule et un point de la tête, des moyens de mesure de la position angulaire de la tête par rapport au support, et des moyens de calcul des coordonnées des points mesurés, caractérisé en ce qu'il comprend :
- un télémètre laser (2), qui a pour but de mesurer la distance le séparant de chaque point à mesurer,
- des moyens (9, 10) d'orientation du rayon laser autour de deux axes de rotation perpendiculaires,
- deux ensembles moteurs pas à pas et réducteurs assurant les deux mouvements de rotation et,
- un calculateur équipé d'un micro-processeur destiné à :
. acquérir chaque mesure de distance mesurée par le télémètre,
. commander le mouvement des moteurs pas à pas en mémorisant le nombre de pas effectués au cours de la rotation, autour de chaque axe,
. calculer, à partir de la distance entre le télémètre et chaque point, et des angles de rotation du faisceau entre les différents points mesurés, la distance entre au moins deux points, ou les coordonnées d'au moins un point par rapport à un point mesuré précédemment.

2. Dispositif selon la Revendication 1, caractérisé en ce que le calculateur est équipé de moyens de stockage en mémoire de valeurs théoriques des coordonnées d'un certain nombre de points ou des distances entre certains points du véhicule, et de moyens de comparaison des valeurs mesurées à ces valeurs théoriques, ou de valeurs mesurées entre elles.

3. Dispositif selon l'une quelconque des Revendications 1 et 2, caractérisé en ce qu'il comprend une cible réflectrice (16) destinée à être fixé en chaque point du véhicule appartenant à une série de mesures.

4. Dispositif selon la Revendication 3, caractérisé en ce que le télémètre est conçu également pour mesurer l'intensité lumineuse du rayon laser reçu, le calculateur étant agencé pour agir sur les moteurs pas à pas de positionnement du rayon laser, pour déplacer celui-ci vis-à-vis d'une cible, jusqu'à réception de l'intensité lumineuse maximale.

5. Dispositif selon l'une quelconque des Revendications 1 à 4, caractérisé en ce que le télémètre (2) est monté sur un support (8) articulé suivant deux axes de rotation perpendiculaires (9, 10), le point d'intersection de ces deux axes étant confondu avec le point d'origine des mesures du télémètre.

6. Dispositif selon l'une quelconque des Revendications 1 à 4, caractérisé en ce que le télémètre (2) est monté sur un support fixe et le rayon laser est pointé sur un miroir (12), articulé autour de deux axes perpendiculaires dont le point d'intersection est confondu avec le point d'impact du rayon laser sur le miroir.

7. Dispositif selon l'une quelconque des Revendications 1 à 6, caractérisé en ce qu'un dispositif électronique permet, sur demande du calculateur, de renvoyer sur le récepteur une partie du faisceau de l'émetteur selon un trajet connu, donnant ainsi une possibilité d'étalonnage. Ceci permet de s'affranchir des éventuelles variations dans le temps de paramètres tels que température ou pression atmosphérique.

8. Dispositif selon l'une quelconque des Revendications 1 à 7, caractérisé en ce qu'il comprend un chariot (3) sur lequel est monté le télémètre (2).

## Patentansprüche

1. Vorrichtung zur Kontrolle der Lage von verschiedenen Punkten eines Fahrzeugs,
mit einem auf einem Träger um mindestens zwei nicht parallele Rotationsachsen drehbar gelagerten Kopf,
mit einer Einrichtung, um einen Abstand zwischen einem Punkt des Fahrzeugs und einem Punkt des Kopfes zu definieren,
mit einer Einrichtung zum Messen der Winkelposition des Kopfes relativ zum Träger, und
mit einer Einrichtung zum Errechnen der Koordinaten der gemessenen Punkte,
**gekennzeichnet** durch folgende Komponenten:
- ein Telemetrie-Laser (2), um den Abstand jedes einzelnen Meßpunktes zu messen,
- eine Einrichtung (9,10) zur Orientierung des Laserstrahls um zwei zueinander senkrechte Rotationsachsen,
- zwei mit Getriebe versehene Schrittmotoranordnungen zur Sicherstellung der beiden Rotationsbewegungen, und
- einen Rechner, der mit einem Mikroprozessor versehen ist, um:
. jede durch Telemetrie gemessene Abstandsmessung zu erhalten,
. die Bewegung der Schrittmotoren durch Speicherung der Rotationsschritte um jede Achse zu steuern,
. den Abstand zwischen zumindest zwei Punkten oder die Koordinaten mindestens eines Punktes bezüglich eines vorangegangenen Meßpunktes zu messen, ausgehend von dem Abstand zwischen der Telemetrieeinrichtung und jedem Meßpunkt und den Rotationswinkeln des Strahlenbündels zwischen den verschiedenen Meßpunkten.

2. Vorrichtung nach Anspruch 1,
dadurch **gekennzeichnet,**
daß der Rechner einen Speicher, um theoretische Koordinatenwerte einer bestimmten Anzahl von Punkten oder die Abstände zwischen bestimmten Punkten des Fahrzeugs zu speichern, und eine Einrichtung aufweist, zum Vergleichen der gemessenen Werte mit den theoretischen Werten oder der gemessenen Werte untereinander.

3. Vorrichtung nach Anspruch 1 und 2,
dadurch **gekennzeichnet,**
daß sie eine Reflektionsscheibe (16) enthält, die zur Befestigung an jedem Punkt eines Fahrzeugs vorgesehen ist, der einer Meßserie angehört.

4. Vorrichtung nach Anspruch 3,
dadurch **gekennzeichnet,**
daß die Telemetrieeinrichtung gleichfalls zu Messung der Strahlungsintensität der empfangenen Laserstrahlung konzipiert ist, und daß der Rechner über die Schrittmotoren zur Positionierung des Laserstrahls eingerichtet ist, um diesen gegenüber einer Reflexionsscheibe bis zum Empfang der höchsten Strahlungsintensität zu verstellen.

5. Vorrichtung nach einem der Ansprüche 1 bis 4,
dadurch **gekennzeichnet,**
daß die Telemetrieeinrichtung (2) auf einem Träger (8) angeordnet ist, der um zwei zueinander senkrechte Rotationsachsen (9,10) drehbar angelenkt ist, wobei der Schnittpunkt der beiden Achsen mit dem Ausgangspunkt der Telemetriemessung zusammenfällt.

6. Vorrichtung nach einem der Ansprüche 1 bis 4,
dadurch **gekennzeichnet,**
daß die Telemetrieeinrichtung (2) auf einem festen Träger angeordnet ist, und daß der Laserstrahl durch einen Spiegel (12) ausgerichtet wird, der um zwei zueinander senkrechte Achsen drehbar angelenkt ist, deren Schnittpunkt mit dem Auftreffpunkt des Laserstrahle auf den Spiegel zusammenfällt.

7. Vorrichtung nach einem der Ansprüche 1 bis 6,
dadurch **gekennzeichnet,**
daß es eine elektronische Einrichtung erlaubt, auf Anforderung des Rechners einen Teil des Bündels von dem Sender in einer bekannten Bahn auf den Empfänger zurückzustrahlen, wodurch eine Möglichkeit zur Einjustierung bzw. Eichung gegeben ist. Dies erlaubt die Kompensation eventueller zeitbedingter Änderungen der Parameter, wie Temperatur oder Atmosphärendruck.

8. Vorrichtung nach einem der Ansprüche 1 bis 7,
dadurch **gekennzeichnet,**
daß sie ein Fahrgestell (3) aufweist, auf dem die Telemetrieeinrichtung (2) montiert ist.

## Claims

1. Device for monitoring the position of different points on a vehicle, of the type comprising a head mounted so as to pivot on a support about at least two non-parallel axes of rotation, and equipped with means for defining the distance between a point on the vehicle and a point on the head, means for measuring the angular position of the head with respect to the support, and means for computing the coordinates of the points measured, characterised in that it comprises:
- a laser range finder (2) the purpose of which is to measure the distance separating it from each point to be measured,
- means (9, 10) for orienting the laser beam about two axes of rotation at right angles to each other,
- two stepping motor and gearbox assemblies providing the two rotational movements, and
- a computer equipped with a microprocessor intended to:
. acquire each distance measurement measured by the range finder,
. control the movement of the stepping motors, storing the number of steps effected during the rotation about each axis,
. calculate, from the distance between the range finder and each point and from the angles of rotation of the beam between the different points measured, the distance between at least two points, or the coordinates of at least one point with respect to a previously measured point.

2. Device according to Claim 1, characterised in that the computer is equipped with means for storing in memory theoretical values of the coordinates of a certain number of points or of the distances between certain points on the vehicle, and means for comparing the values measured with these theoretical values, or values measured between them.

3. Device according to either one of Claims 1 or 2,
characterised in that it comprises a reflective target (16) intended to be fixed at each point on the vehicle relating to a series of measurements.

4. Device according to Claim 3, characterised in that the range finder is also designed to measure the light intensity of the laser beam received, the computer being arranged to act on the stepping motors for positioning the laser beam, in order to move the latter with respect to a target, until the maximum light intensity is received.

5. Device according to any one of Claims 1 to 4,
characterised in that the range finder (2) is mounted on a support (8) articulated on two axes of rotation (9, 10) at right angles to each other, the point of intersection of these two axes being the same as the point of origin of the range finder measurements.

6. Device according to any one of Claims 1 to 4,
characterised in that the range finder (2) is mounted on a fixed support and the laser beam is aimed at a mirror (12), articulated about two axes at right angles to each other, the point of intersection of which is the same as the point of impact of the laser beam on the mirror.

7. Device according to any one of Claims 1 to 6,
characterised in that an electronic device makes it possible, on request from the computer, to send to the receiver a part of the beam from the transmitter on a known path, thus giving a facility for calibration. This makes it possible to eliminate any possible variations, over time, of parameters such as temperature or atmospheric pressure.

8. Device according to any one of Claims 1 to 7,
characterised in that it comprises a carriage (3) on which the range finder (2) is mounted.
